# EUROPÄISCHE PATENTANMELDUNG

(11) **EP 4 796 353 A1**
(43) Veröffentlichungstag der Anmeldung: **26.08.2026**
(21) Anmeldenummer: 26159967.4
(22) Anmeldetag: 22.02.2026
(51) Int. Cl.: B60J 7/16

(54) **DACH FÜR EINEN LASTKRAFTWAGEN ODER ANHÄNGER**

(30) Priorität: 25.02.2025 AT 292025
(71) Anmelder: Peischl Fahrzeugbau GmbH, 7551 Stegersbach (AT)
(72) Erfinder: Peischl, Ernst Kommerzialrat, 7551 Stegersbach (AT)
(74) Vertreter: Ellmeyer, Wolfgang

(57) **Zusammenfassung**

Dach für einen Lastkraftwagen oder Anhänger mit einem von oben befüllbaren Laderaum (1), das den gesamten Laderaum (1) überdeckt, wobei zum Schwenken des Daches (2) über eine obere Kante des Laderaumes (1) zwischen einer horizontalen Stellung, in der der Laderaum (1) geschlossen ist, und einer seitlichen Stellung, in der der Laderaum (1) abgedeckt ist, an entgegengesetzten Stirnseiten jeweils ein Schwenkarm (5) vorgesehen ist, der einerseits am Dach (2) an einem Dachanlenkpunkt (19) und andererseits im oberen Bereich des Laderaumes (1) an einem Laderaumanlenkpunkt (13) angelenkt ist und an zumindest einem der Schwenkarme (5) ein Antriebselement (6) angreift, um diesen zwischen der horizontalen Stellung und der seitlichen Stellung zu bewegen, wobei an der der Anlenkung der Schwenkarme (5) gegenüberliegende Seite des Daches (2) mindestens ein Führungsarm (7) angelenkt ist, der außen an einer Seitenwand (26) des Laderaums (1) zwischen einer nach oben weisenden und einer nach unten weisenden Stellung schwenkbar ist, wobei das Dach (2) in seiner seitlichen, abgedeckten Stellung parallel zur Seitenwand (26) des Laderaumes (1) orientiert ist, unter der Maßgabe dass der durch den Schwenkarm (5) definierte Abstand R zwischen dem Laderaumanlenkpunkt (13) und dem Dachanlenkpunkt (19) gleich der Summe der halben Breite B des Daches (2) und der seitlichen Versetzung V des Laderaumanlenkpunktes (13) gegenüber der Mitte M und somit R = B/2 + V ist; und dass in der abgedeckten Stellung des Daches (2) der Dachanlenkpunkt (19) des Schwenkarms (5) gegenüber dem Laderaumanlenkpunkt (13) um das Ausmaß 2H höhenversetzt ist, wobei H gleich der Höhenversetzung des Dachanlenkpunktes (19) gegenüber dem Laderaumanlenkpunkt (13) in der geschlossenen Stellung des Daches (2) ist.

## Beschreibung

Die Erfindung bezieht sich auf ein Dach für einen Lastkraftwagen oder Anhänger mit einem von oben befüllbaren Laderaum, das den gesamten Laderaum überdeckt, wobei zum Schwenken des Daches über eine obere Kante des Laderaumes zwischen einer horizontalen Stellung, in der der Laderaum geschlossen ist, und einer seitlichen Stellung, in der der Laderaum abgedeckt ist, an entgegengesetzten Stirnseiten jeweils ein Schwenkarm vorgesehen ist, der einerseits am Dach an einem Dachanlenkpunkt und andererseits im oberen Bereich des Laderaumes an einem Laderaumanlenkpunkt angelenkt ist und an zumindest einem der Schwenkarme ein Antriebselement angreift, um diesen zwischen der horizontalen Stellung und der seitlichen Stellung zu bewegen, wobei an der der Anlenkung der Schwenkarme gegenüberliegenden Seite des Daches mindestens ein Führungsarm angelenkt ist, der außen am Laderaum zwischen einer nach oben weisenden und einer nach unten weisenden Stellung schwenkbar ist.

Von oben in den Laderaum einzufüllende Schüttgüter sind z.B. Sägespäne, Hackschnitzel und dergleichen. Die Entladung der Schüttgüter erfolgt entweder durch Kippen des gesamten Laderaumes oder zweckmäßiger über hintere Türen und einen Schiebeboden, durch den das Schüttgut durch die geöffneten Türen hinausgeschoben wird.

In der EP 1477 353 A2 sind zur Führung des Daches vorne und hinten Führungen ausgebildet, die mit an einer oberen Kante des Laderaumes angeordneten Gegenführungen zusammenwirken. Das Dach besteht aus einem Dachrahmen mit Querstreben und einer darüberliegenden Stoffbahn. Bei sehr hohem Füllstand kann es dabei zu Problemen mit den Schüttgütern kommen, die die Führungen blockieren können bzw. die Querstreben das Schließen des Daches verhindern.

Weiters geht aus der EP 1 902 886 A2 ein Dach hervor, das zwar mit Schwenkarmen ausgestattet ist, um es in eine schräge seitliche Stellung relativ zum Laderaum zu bewegen, wobei diese Schrägstellung des Dachs in der Endposition in seitlicher Richtung und nach oben hin relativ viel Platz in Anspruch nimmt. Dies kommt dann zum Tragen, wenn der Lastkraftwagen oder der Anhänger in Durchfahrten oder Hallen abgestellt ist. Es ist auch nicht möglich, das Fahrzeug mit geöffnetem Dach an engen Stellen zu wenden oder mit diesem Kurven zu fahren, da das Dach im geöffneten Zustand schräg vorsteht. Die Schrägstellung des Daches im abgedeckten Zustand ist erforderlich, um ein Anheben in den geschlossenen Zustand bei vertretbarem Kraftaufwand durch das lineare Antriebselement zu ermöglichen.

Die Erfindung hat es sich daher zum Ziel gesetzt, ein Dach der oben genannten Art zu schaffen, das in seiner offenen, abgedeckten Stellung auch ein Manövrieren des Lastkraftwagens oder Anhängers ohne Behinderungen ermöglicht.

Erreicht wird dies erfindungsgemäß dadurch, dass das Dach in seiner seitlichen, abgedeckten Stellung parallel zur Seitenwand des Laderaumes orientiert ist, unter der Maßgabe
- dass der durch den Schwenkarm definierte Abstand R zwischen dem Laderaumanlenkpunkt und dem Dachanlenkpunkt gleich der Summe der halben Breite B des Daches und der seitlichen Versetzung V des Laderaumanlenkpunktes gegenüber der Mitte M und somit R = B/2 + V ist;
- dass in der abgedeckten Stellung des Daches der Dachanlenkpunkt des Schwenkarms gegenüber dem Laderaumanlenkpunkt um das Ausmaß 2H höhenversetzt ist, wobei H gleich der Höhenversetzung des Dachanlenkpunktes gegenüber dem Laderaumanlenkpunkt in der geschlossenen Stellung des Daches ist.

Auf diese Weise wird eine völlige Parallelstellung des Daches zur Seitenwand des Laderaumes ermöglicht, sodass ein Lastkraftwagen oder ein Anhänger auch in Durchfahrten oder in Hallen auch in abgedeckter Stellung des Daches platzsparend bewegt bzw. gewendet werden kann. Dabei stellt der Schwenkarm in der offenen Stellung des Daches auch in seiner Höhenerstreckung keine Behinderung der Bewegung dar, da er relativ geringfügig über das Dach vorsteht. Zugleich kann in dieser Konfiguration das Anheben des Daches aus dem abgedeckten Zustand in den geschlossenen Zustand mit dem Antriebselement bewältigt werden.

Somit ergibt sich insgesamt eine geringere Gesamtbreite und eine niedrigere Gesamthöhe im geöffneten Zustand des Daches.

Das Dach kann nicht durch zu hoch eingefülltes Schüttgut hochgehoben werden, da es beim Schließvorgang die Oberkanten des Laderaums nicht berührt und im geschlossenen Zustand mit seinem Rahmen nur auf den Laderaumoberkanten aufliegt. Ein Schließen des Daches ist damit immer gewährleistet.

In Weiterbildung der Erfindung kann das Dach aus einem rechteckförmigen Dachrahmen gebildet sein, der ohne Querstreben ausgebildet und an seinen Ecken durch Verstrebungsplatten versteift sein kann. Durch den Wegfall von Querstreben wird eine Behinderung durch zu hoch eingefülltes Schüttgut vermieden.

Im Rahmen der Erfindung können die Verstrebungsplatten annähernd einen dreieckförmigen Grundriss aufweisen. Überdies besitzen sie vorteilhaft einen wellenförmigen Querschnitt. Durch diese Ausbildungen wird eine sichere Versteifung des Dachrahmens auch ohne Querstreben erreicht.

Eine Abdichtung des Daches kann dadurch erfolgen, dass längs der oberen Seitenkanten des Laderaumes schräg nach oben weisende Anschläge angeordnet sind, die mit Gegenflächen am Dachrahmen im geschlossenen Zustand des Daches zusammenwirken.

In weiterer Ausbildung der Erfindung kann vorgesehen sein, dass der Dachrahmen aus einem Hohlprofil, vorzugsweise aus einem Vierkantrohr, gebildet ist, das auf der Rahmeninnenseite eine schräge Fläche aufweist, um in der geschlossenen Stellung des Daches mit einer gegengleichen Fläche eines Dichtungsanschlags, der auf den oberen Seitenkanten des Laderaumes ausgebildet ist und diese - im Querschnitt gesehen - im Wesentlichen überdeckt, in Berührung zu gelangen, um eine Abdichtung zu erzielen.

Auf diese Weise wird verhindert, dass ein Teil des Schüttguts während des Befüllens des Laderaumes auf den oberen Seitenkanten liegenbleibt. Dadurch wird das Schließen des Daches durch Schüttgutreste nicht behindert.

Eine weitere Ausführungsform der Erfindung kann darin bestehen, dass der auf den oberen Seitenkanten des Laderaumes ausgebildete Dichtungsanschlag durch ein auf den oberen Seitenkanten des Laderaumes umlaufend angeordnetes Profilelement ausgebildet ist, das beispielsweise einen umgekehrten V-förmigen Querschnitt aufweisen oder aus einem Aluminiumwinkel gebildet sein kann.

Das solcherart angeordnete Profilelement sorgt für eine sichere Abdichtung des Laderaumes nach oben hin und verhindert ein Zurückbleiben von Schüttguttresten auf den oberen Seitenkanten des Laderaums, da diese über das dachartig angeordnete Hohlprofil entweder in das Innere des Laderaumes oder nach außen abgeleitet wird.

Nachstehend ist die Erfindung anhand eines in den Zeichnungen dargestellten Ausführungsbeispiels näher beschrieben, ohne auf dieses Ausführungsbeispiel beschränkt zu sein. Dabei zeigen:
Fig.1 schematisch eine Stirnseitenansicht eines aus dem Stand der Technik bekannten Daches in einer Mittelstellung;
Fig.2 eine Draufsicht auf einen Teil des Daches nach Fig.1;
Fig.3 eine schematische Seitenansicht des Daches nach Fig. 2;
Fig.4 eine schematische Stirnseitenansicht einer Ausführungsform des erfindungsgemäßen Daches;
Fig.5 einen Querschnitt durch ein Detail der Fig.1 und
Fig.6 einen Querschnitt durch ein Detail der Fig.4.

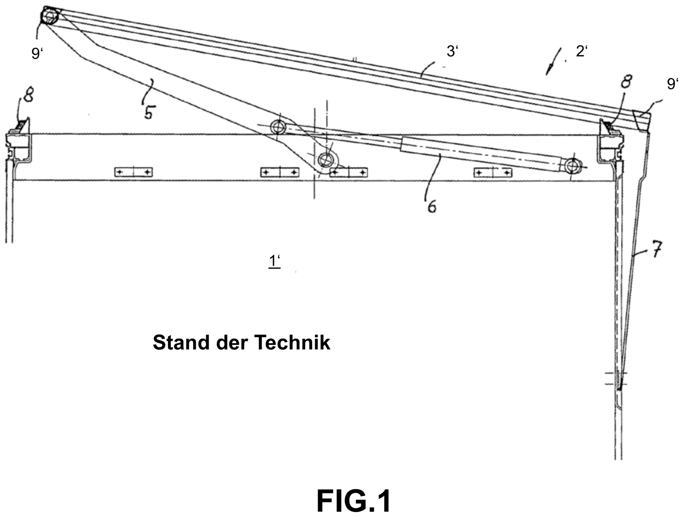

Gemäß Fig.1 ist zur Abdeckung des Laderaumes 1' eines Lastkraftwagens oder Anhängers ein aus dem Stand der Technik bekanntes Dach 2' angeordnet.

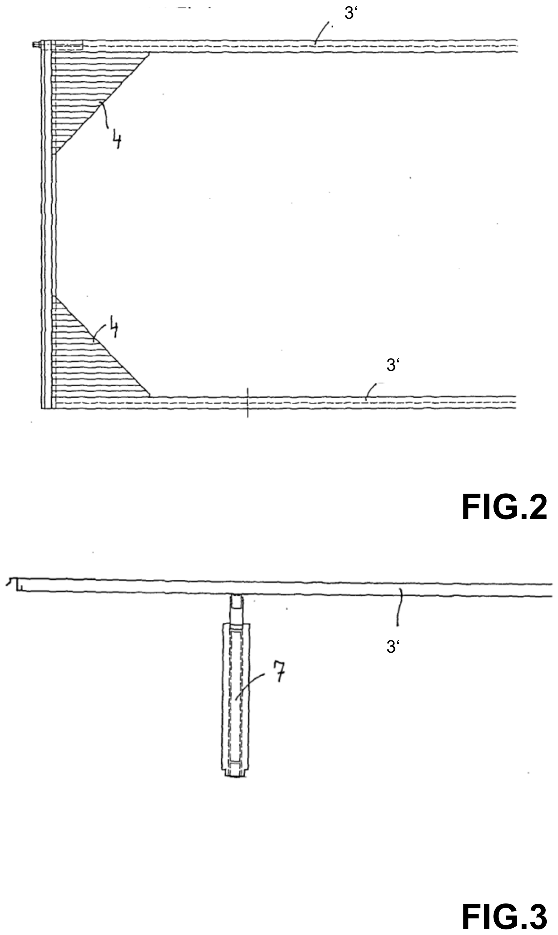

Das Dach 2' besteht aus einem Dachrahmen 3', an dessen Ecken Verstrebungsplatten 4 eingesetzt sind (Fig.2), wobei keine Querstreben vorhanden sind. Der Dachrahmen 3' kann z.B. aus runden Rohren, Formrohren, verschweißten Kastenprofilen od. dgl. bestehen. Der Dachrahmen 3' wird von einer Stoffbespannung (nicht dargestellt) überdeckt.

An der vorderen und hinteren Stirnseite des Daches 2' greift je ein Schwenkarm 5 an, dessen anderes Ende im oberen Bereich des Laderaumes 1' angelenkt ist. An mindestens einem der beiden Schwenkarme 5 greift ein hydraulischer Schubmotor 6 an, der ebenfalls im oberen Bereich des Laderaumes 1 schwenkbar gelagert ist.

An der der Anlenkung der Schwenkarme 5 gegenüberliegenden Seite des Daches 2' ist mindestens ein Führungsarm 7 (Fig.3) angelenkt, der außen am Laderaum 1' zwischen einer nach oben weisenden und einer nach unten weisenden Stellung schwenkbar ist. Beispielsweise sind drei Führungsarme 7 außen an der Seitenwand des Laderaumes 1 verteilt angeordnet.

Das Dach 2' ist somit zwischen einer geschlossenen Stellung und einer abgedeckten, offenen Stellung zwangsläufig geführt, ohne dass die Oberkanten des Laderaumes 1' berührt werden.

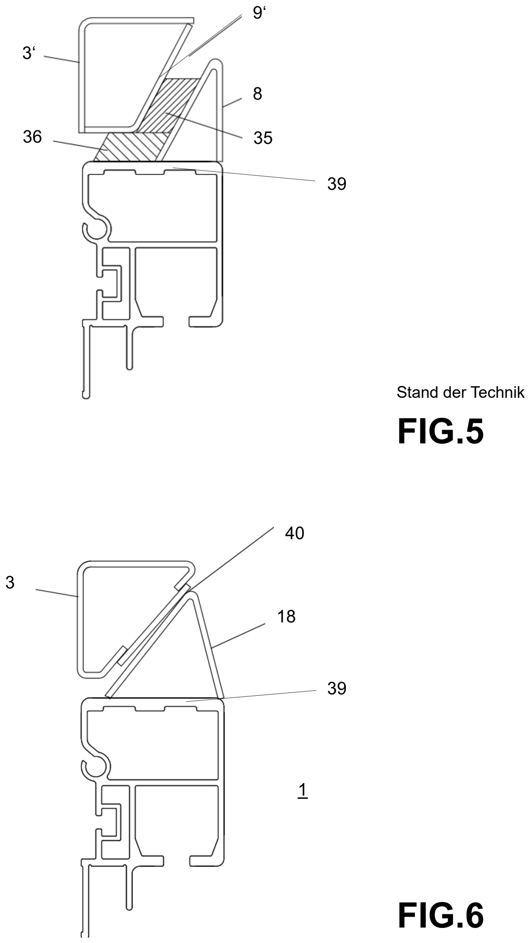

Um eine Dichtheit des geschlossenen Daches zu erreichen, sind längs der oberen Seitenkanten des Laderaumes 1' schräg nach oben weisende Anschläge 8 angeordnet, die im geschlossenen Zustand des Daches 2' mit Gegenflächen 9' des Dachrahmens 3' zusammenwirken (Fig.5), wobei ein Distanzanschlag 35 zwischen dem Dachrahmen 3' und dem Anschlag 8 sowie ein weiterer Distanzanschlag 36 zwischen dem Dachrahmen 3' und der oberen Seitenkante 39 des Laderaumes 1' vorgesehen sind, um ein dichtes Anliegen des Dachrahmens 3 zu gewährleisten (Fig.5). Da die Distanzanschläge auch waagrechte Flächenbereiche aufweisen, kann auf diesen Schüttmaterial zurückbleiben.

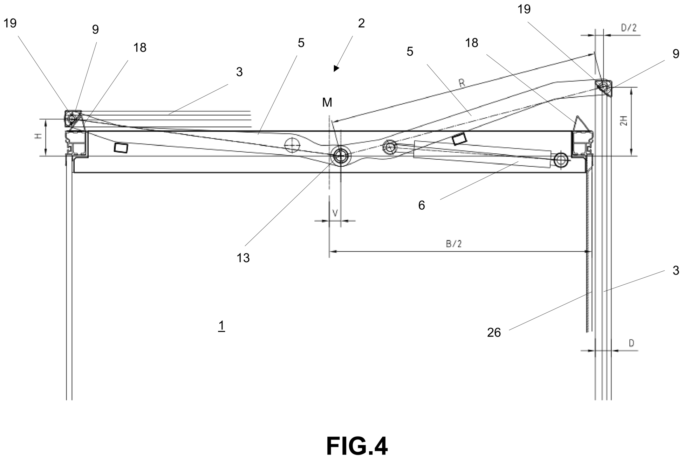

Fig.4 zeigt eine Ausführungsform eines erfindungsgemäßen Daches 2 für einen Lastkraftwagen oder Anhänger mit einem von oben befüllbaren Laderaum 1, wobei in Fig.4 sowohl die geschlossene, horizontale Stellung als auch die abgedeckte, vertikale Stellung des Daches 2 bzw. des Dachrahmens 3 dargestellt ist.

Zum Schwenken des Daches 2 über eine obere Seitenkante des Laderaumes 1 zwischen einer horizontalen Stellung, in der der Laderaum 1 geschlossen ist, und einer seitlichen Stellung, in der der Laderaum 1 abgedeckt ist, ist an entgegengesetzten Stirnseiten jeweils ein Schwenkarm 5 vorgesehen, der einerseits am Dach 2 an einem Dachanlenkpunkt 19 und andererseits im oberen Bereich des Laderaumes 1 an einem Laderaumanlenkpunkt 13 angelenkt ist.

An zumindest einem der Schwenkarme 5 greift ein, vorzugsweise lineares, Antriebselement 6 an, um diesen zwischen der horizontalen Stellung und der seitlichen Stellung des Daches 2 zu bewegen, wobei an der der Anlenkung der Schwenkarme 5 gegenüberliegenden Seite des Daches 2 mindestens ein Führungsarm 7 (in Fig.4 nicht dargestellt) angelenkt ist, der außen am Laderaum 1 zwischen einer nach oben weisenden und einer nach unten weisenden Stellung schwenkbar ist.

Um ein Angreifen des Antriebselements 6 am Schwenkarm 5 über den gesamten Winkelbereich von der geschlossenen bis zur abgedeckten Stellung des Daches 2 zu ermöglichen, ist der Schwenkarm 5 an zwei Bereichen entlang seiner Längserstreckung leicht gekröpft ausgeführt.

Erfindungsgemäß ist das Dach 2 in seiner seitlichen, abgedeckten Stellung parallel zur Seitenwand des Laderaumes 1 orientiert, wobei Folgendes vorgesehen ist:
1) Der durch den Schwenkarm 5 definierte Abstand R zwischen dem Laderaumanlenkpunkt 13 und dem Dachanlenkpunkt 19 ist gleich der Summe der halben Breite B des Daches 2 und der seitlichen Versetzung V des Laderaumanlenkpunktes 13 gegenüber der Mitte M, also $R = B / 2 + V .$
2) In der abgedeckten Stellung des Daches 2 ist der Dachanlenkpunkt 9 des Schwenkarms 5 gegenüber dem Laderaumanlenkpunkt 13 um das Ausmaß 2H höhenversetzt, wobei H gleich der Höhenversetzung des Dachanlenkpunktes 19 gegenüber dem Laderaumanlenkpunkt 13 in der geschlossenen Stellung des Daches 2 ist.

Durch diese erfindungsgemäße Wahl der Abmessungen ist eine senkrechte Positionierung des Daches 2 möglich, wobei das Antriebselement 6 das Dach 2 aus der senkrechten Stellung in die horizontale geschlossene Stellung anheben kann.

Fig.6 zeigt ein Detail des erfindungsgemäßen Daches 2 im Bereich der oberen Seitenkante 39 des Laderaums 1. Der Dachrahmen 3 ist aus einem Hohlprofil in Form eines Vierkantrohrs gebildet, das auf der Rahmeninnenseite eine schräge Fläche 40 aufweist, um in der in Fig.6 gezeigten geschlossenen Stellung des Daches mit einer gegengleichen Fläche eines Dichtungsanschlags 18 in Berührung zu gelangen, wobei der Dichtungsanschlag 18 auf der oberen Seitenkante 39 des Laderaums 1 ausgebildet ist und die obere Seitenkante 39 - im Querschnitt gesehen - im Wesentlichen überdeckt. Die dachartige Form des Dichtungsanschlags 18 bewirkt dabei, dass Schüttgut beim Befüllen des Laderaums 1 nicht auf der oberen Seitenkante 39 liegen bleiben kann, sodass der Schließvorgangs des Daches 2 ohne Behinderungen vor sich gehen kann. Im geschlossenen Zustand des Daches 2 kommt die schräge Fläche 40 mit dem Dichtungsanschlag 18 in Berührung und diese beiden wirken dabei zusammen, um eine Abdichtung des Laderaums 1 gegenüber der Umgebung zu erzeugen. Im Unterschied zur Ausführung gemäß Fig.5 gibt es im Bereich der beim Schließvorgang zusammenwirkenden Flächen keine waagrechten Stellen, an denen sich Schüttmaterial anhäufen kann.

Der Dichtungsanschlag 18 ist durch ein auf den oberen Seitenkanten des Laderaumes 1 umlaufend angeordnetes Profilelement ausgebildet, das einen umgekehrten V-förmigen Querschnitt aufweist.

Das umlaufend angeordnete Profilelement kann z.B. aus einem Aluminiumwinkel gebildet sein.

## Patentansprüche

1. Dach für einen Lastkraftwagen oder Anhänger mit einem von oben befüllbaren Laderaum (1), das den gesamten Laderaum (1) überdeckt, wobei zum Schwenken des Daches (2) über eine obere Kante des Laderaumes (1) zwischen einer horizontalen Stellung, in der der Laderaum (1) geschlossen ist, und einer seitlichen Stellung, in der der Laderaum (1) abgedeckt ist, an entgegengesetzten Stirnseiten jeweils ein Schwenkarm (5) vorgesehen ist, der einerseits am Dach (2) an einem Dachanlenkpunkt (19) und andererseits im oberen Bereich des Laderaumes (1) an einem Laderaumanlenkpunkt (13) angelenkt ist und an zumindest einem der Schwenkarme (5) ein Antriebselement (6) angreift, um diesen zwischen der horizontalen Stellung und der seitlichen Stellung zu bewegen, wobei an der der Anlenkung der Schwenkarme (5) gegenüberliegende Seite des Daches (2) mindestens ein Führungsarm (7) angelenkt ist, der außen an einer Seitenwand (26) des Laderaums (1) zwischen einer nach oben weisenden und einer nach unten weisenden Stellung schwenkbar ist, **dadurch gekennzeichnet, dass** das Dach (2) in seiner seitlichen, abgedeckten Stellung parallel zur Seitenwand (26) des Laderaumes (1) orientiert ist, unter der Maßgabe
- dass der durch den Schwenkarm (5) definierte Abstand R zwischen dem Laderaumanlenkpunkt (13) und dem Dachanlenkpunkt (19) gleich der Summe der halben Breite B des Daches (2) und der seitlichen Versetzung V des Laderaumanlenkpunktes (13) gegenüber der Mitte M und somit R = B/2 + V ist;
- und dass in der abgedeckten Stellung des Daches (2) der Dachanlenkpunkt (19) des Schwenkarms (5) gegenüber dem Laderaumanlenkpunkt (13) um das Ausmaß 2H höhenversetzt ist, wobei H gleich der Höhenversetzung des Dachanlenkpunktes (19) gegenüber dem Laderaumanlenkpunkt (13) in der geschlossenen Stellung des Daches (2) ist.

2. Dach nach Anspruch 1, **dadurch gekennzeichnet, dass** das Dach (2) aus einem rechteckförmigen Dachrahmen (3) gebildet ist, der ohne Querstreben ausgebildet ist.

3. Dach nach Anspruch 2, **dadurch gekennzeichnet, dass** der Dachrahmen (3) an seinen Ecken durch Verstrebungsplatten (4) versteift ist.

4. Dach nach Anspruch 3, **dadurch gekennzeichnet, dass** die Verstrebungsplatten (4) annähernd einen dreieckförmigen Grundriss besitzen.

5. Dach nach Anspruch 4, **dadurch gekennzeichnet, dass** die Verstrebungsplatten (4) einen wellenförmigen Querschnitt besitzen.

6. Dach nach einem der Ansprüche 2 bis 5, **dadurch gekennzeichnet, dass** der Dachrahmen (3) aus einem Hohlprofil, vorzugsweise aus einem Vierkantrohr, gebildet ist, das auf der Rahmeninnenseite eine schräge Fläche (40) aufweist, um in der geschlossenen Stellung des Daches mit einer gegengleichen Fläche eines Dichtungsanschlags (8), der auf den oberen Seitenkanten des Laderaumes ausgebildet ist und diese - im Querschnitt gesehen - im Wesentlichen überdeckt, in Berührung zu gelangen.

7. Dach nach Anspruch 6, **dadurch gekennzeichnet, dass** der auf den oberen Seitenkanten des Laderaumes ausgebildete Dichtungsanschlag durch ein auf den oberen Seitenkanten des Laderaumes (1) umlaufend angeordnetes Profilelement ausgebildet ist.

8. Dach nach Anspruch 7, **dadurch gekennzeichnet, dass** das umlaufend angeordnete Profilelement einen umgekehrten V-förmigen Querschnitt aufweist.

9. Dach nach Anspruch 7, **dadurch gekennzeichnet, dass** das umlaufend angeordnete Profilelement aus einem Aluminiumwinkel gebildet ist.
